# EUROPEAN PATENT SPECIFICATION

(11) **EP 2 397 742 B1**
(45) Date of publication and mention of the grant of the patent: **02.03.2016**
(21) Application number: 11161637.1
(22) Date of filing: 08.04.2011
(51) Int. Cl.: F16L 59/00

(54) **Method of manufacturing a pipe section of mineral wool and the pipe section**
Verfahren zur Herstellung eines Rohrabschnitts aus Mineralwolle und Rohrabschnitt
Procédé de fabrication de section de tuyau de laine minérale et section de tuyau

(30) Priority: 16.06.2010 FI 20105695
(43) Date of publication of application: 21.12.2011
(73) Proprietor: Paroc Group Oy, 00180 Helsinki (FI)
(72) Inventor: HJELT, Tuomo, 53850, Lappeenranta (FI)
(74) Representative: LEITZINGER OY

(56) References cited:
- EP-A1- 1 895 224
- EP-A1- 2 123 426
- EP-A1- 2 180 229
- WO-A1-2008/017147
- US-A1- 2007 178 283

## Description

The present invention relates to a method of manufacturing a pipe section of mineral wool. The invention relates also to a pipe section manufactured by the method.

According to the prior art, the pipe section (insulation sleeve) is manufactured from an uncured, rolled-up mat of mineral wool, from which is sawn off a run of thin (e.g. 10 to 20 mm thick) sheet, which is then cut to a length matching the desired wall thickness of a section to be manufactured and which is wound around a core for a sandwich type cylinder. This is followed by placing the core, and the layer of mineral wool around it, into a mould and by curing the same e.g. with hot air and/or microwaves.

In EP2123426A1 is shown a mat comprising fibre matrix impregnated with an aerogel, xerogel or cryogelis used to provide a wound mat for a pipe section and prior winding the mat an adhesive is applied to the major surface(s) of the mat. In EP2180229A1 is shown a separate outer insulating element for at least two parallel pipes and an inner insulating element between the at least two parallel pipes. In WO2008/017147A1 is shown a layered insulation structure having at least two insulation layers with different k-factor values. In US2007/0178283A1 is described a laminated insulation structure.

It is an objective of the present invention to provide a method, which enables producing a run of pipe section of considerably improved thermal insulation capacity in a relatively simple manner. In order to achieve this objective, a method according to the invention is characterized in that the method comprises interposing between layers of mineral wool a material, which is in granular form and which is better in terms of heat insulation, prior to winding the sheet around the core and/or during ongoing the winding process.

The employed heat insulating material is aerogel, consisting of solid microporous silicate foam. It is manufactured by foaming mass of molten glass by means of a mixture liquid and compressed air, such that the glass develops an enormous amount of extremely small and thin-walled bubbles and passages, inside which the air is trapped.

In EP1895224A1 is described a tubular insulation material comprising layers of mineral wool containing fire retarding material in between.

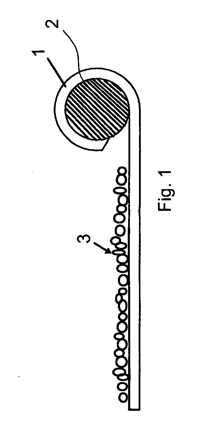

The invention will now be described more closely with reference to the accompanying drawing, whose only figure 1 shows schematically one implementation phase in a method of the invention.

Fig. 1 depicts a sheet 1 of mineral wool in the process of being wound around a core 2. The sheet 1 has been wound to almost a full circle around the core to form a first layer of wool. The addition of a thermally insulating material 3 is preferably conducted at this point, just before starting the winding of a second layer. The heat insulating material 3 is added on top of the sheet 1 at a location upstream of the core 2 and/or on top of a layer of wool already wound around the core 2. This enables layers containing a thermally insulating material, such as aerogel, to be provided between the wound-up layers of wool. The layers may develop a substantially integral unit, but, naturally, this depends on the amount of added material. It is also conceivable that the added material be pressed partially within the sheet, e.g. by using a press roll or roller (not shown) positioned above the sheet and upstream of the core 2 to ensure its uniform spreading across the sheet surface.

Following the addition of a thermally insulating material, the manufacturing process of a pipe section continues as per prior art, whereby the core, and the layer of mineral wool around it, are placed in a mould and cured. This is followed by drawing the cured section off of the top of the core, by sawing off the core ends, and, in a typical case, by finally coating the sections e.g. with a fiber mesh reinforced aluminum foil. The coated section is slit open longitudinally by at least one line along its entire length. Finally, the sections are transferred to a packaging apparatus carrying out the wrapping and stacking of ready-to-use section products.

## Claims

1. A method of manufacturing a pipe section of mineral wool, said method comprising the use of an uncured mat of mineral wool, from which is sawn off a run of thin sheet (1), which is then cut to a length matching the desired wall thickness of a section to be manufactured and which is wound around a core (2) for a sandwich type cylinder, and next the core, and the cylinder of mineral wool around it, are placed in a mould and cured, **characterized in that** the method comprises interposing between layers of mineral wool aerogel, which is in granular form and which is better in terms of heat insulation, prior to winding the sheet (1) around the core (2) and/or during the ongoing winding process.

2. A pipe section manufactured by the method of claim 1, having several layers of mineral wool wound for a cylindrical configuration, **characterized in that** between superimposed layers of mineral wool is provided aerogel, which is granular and which is better in terms of heat insulation.

## Patentansprüche

1. Verfahren zur Herstellung eines Rohrabschnitts aus Mineralwolle, wobei das Verfahren die Verwendung einer nicht gehärteten Matte aus Mineralwolle umfasst, von der für einen Zylinder der Sandwich-Bauart ein Teil einer dünnen Bahn (1) abgesägt wird, der dann auf eine Länge geschnitten wird, die der gewünschten Wandstärke eines herzustellenden Abschnitts entspricht, und um einen Kern (2) gewickelt wird, und der Kern und der Zylinder aus Mineralwolle um diesen herum anschließend in einem Formwerkzeug platziert und gehärtet werden, **dadurch gekennzeichnet, dass** das Verfahren vor dem Wickeln der Bahn (1) um den Kern (2) und/oder während des laufenden Wickelprozesses das Einlegen eines Aerogels zwischen die Schichten aus Mineralwolle umfasst, wobei das Aerogel in Form eines Granulats vorliegt, das eine bessere Wärmeisolation aufweist.

2. Rohrabschnitt, der mit dem Verfahren nach Anspruch 1 hergestellt wurde und mehrere Schichten aus Mineralwolle aufweist, die zu einer Zylindergestaltung gewickelt sind, **dadurch gekennzeichnet, dass** zwischen sich überlagernden Schichten aus Mineralwolle ein Aerosolgel bereitgestellt ist, das granulär ist und eine bessere Wärmeisolation aufweist.

## Revendications

1. Procédé de fabrication d'une section de tuyau en laine minérale, ledit procédé comprenant l'utilisation d'une natte non cuite de laine minérale, dans laquelle est scié un morceau de feuille mince (1) qui est ensuite coupé à une longueur correspondant à une épaisseur de paroi souhaitée d'une section à fabriquer et qui est enroulé autour d'un noyau (2) en un cylindre de type sandwich et qu'ensuite le noyau et le cylindre de laine minérale qui l'entoure sont placés dans un moule et cuits, **caractérisé en ce que** le procédé comprend l'intercalage entre les couches de laine minérale d'un aérogel qui est sous forme granulaire et qui est meilleur en termes d'isolation thermique avant d'enrouler la feuille (1) autour du noyau (2) et/ou pendant le processus d'enroulement en cours.

2. Section de tuyau fabriqué par le procédé selon la revendication 1, comportant plusieurs couches de laine minérale enroulées en configuration cylindrique, **caractérisée en ce que**, entre des couches superposées de laine minérale, on met de l'aérogel qui est granulaire et qui est meilleur en termes d'isolation thermique.
